# FASCICULE DE BREVET EUROPEEN

(11) **EP 2 646 370 B1**
(45) Date de publication et mention de la délivrance du brevet: **24.04.2019**
(21) Numéro de dépôt: 11784697.2
(22) Date de dépôt: 21.11.2011
(51) Int. Cl.: C01G 25/02, B01J 21/06, C01F 17/00, B01J 23/00, B01J 23/10, B01J 23/36, B01J 23/48, B01J 35/10

(54) **COMPOSITION A BASE D'OXYDE DE ZIRCONIUM ET D'AU MOINS UN OXYDE D'UNE TERRE RARE AUTRE QUE LE CERIUM, A POROSITE SPECIFIQUE, SON PROCEDE DE PREPARATION ET SON UTILISATION EN CATALYSE**
ZUSAMMENSETZUNG AUF DER BASIS VON ZIRKONIUMOXID UND MINDESTENS EINEM OXID EINES ANDEREN SELTENERDMETALLS ALS CER MIT SPEZIFISCHER POROSITÄT, VERFAHREN ZUR HERSTELLUNG UND VERWENDUNG IN DER KATALYSE
COMPOSITION BASED ON ZIRCONIUM OXIDE AND ON AT LEAST ONE OXIDE OF A RARE EARTH OTHER THAN CERIUM, HAVING A SPECIFIC POROSITY, PROCESS FOR PREPARING SAME AND USE THEREOF IN CATALYSIS

(30) Priorité: 30.11.2010 FR 1004653
(43) Date de publication de la demande: 09.10.2013
(73) Titulaire: Rhodia Operations, 93300 Aubervilliers (FR)
(72) Inventeur: IFRAH, Simon, F-17140 Lagord (FR); LARCHER, Olivier, Pennington New Jersey NJ 08534 (US)
(74) Mandataire: Senninger, Thierry
(86) Numéro de dépôt international: PCT/EP2011/070569
(87) Numéro de publication internationale: WO 2012/072439

(56) Documents cités:
- EP-A1- 1 621 251
- FR-A1- 2 926 075

## Description

La présente invention concerne une composition! à base d'oxyde de zirconium et d'au moins un oxyde d'une terre rare autre que le cérium, à porosité spécifique, un procédé de préparation et son utilisation en catalyse.

On utilise à l'heure actuelle pour le traitement des gaz d'échappement des moteurs à combustion interne (catalyse postcombustion automobile) des catalyseurs dits multifonctionnels. Par multifonctionnels, on entend les catalyseurs capables d'opérer non seulement l'oxydation en particulier du monoxyde de carbone et des hydrocarbures présents dans les gaz d'échappement mais également la réduction en particulier des oxydes d'azote également présents dans ces gaz (catalyseurs "trois voies"). Les compositions à base d'oxydes de zirconium et de terres rares apparaissent aujourd'hui comme des éléments intéressants pouvant entrer dans la composition de ce type de catalyseurs.

Les produits de ce type doivent présenter une porosité adaptée à leur utilisation. Ainsi, ils doivent présenter un volume poreux suffisamment important et aussi comporter des pores de taille suffisamment grande pour permettre une bonne diffusion des gaz.

Toutefois, ces mêmes produits doivent aussi présenter des pores de petites tailles car ce sont ces pores qui contribuent à donner aux produits une surface spécifique suffisamment élevée pour que ceux-ci soient utilisables en catalyse.

Il est donc intéressant de trouver un bon compromis entre une surface importante, apportée par les pores de petites tailles et une meilleure diffusion des gaz apportée par les pores de grandes tailles.

L'invention a pour objet de proposer un produit qui possède un volume poreux important et à la fois des pores de grande et de petite taille.

Dans ce but, la composition de l'invention est telle que définie à la revendication 1.

D'autres caractéristiques, détails et avantages de l'invention apparaîtront encore plus complètement à la lecture de la description qui va suivre, en référence au dessin annexé dans lequel :

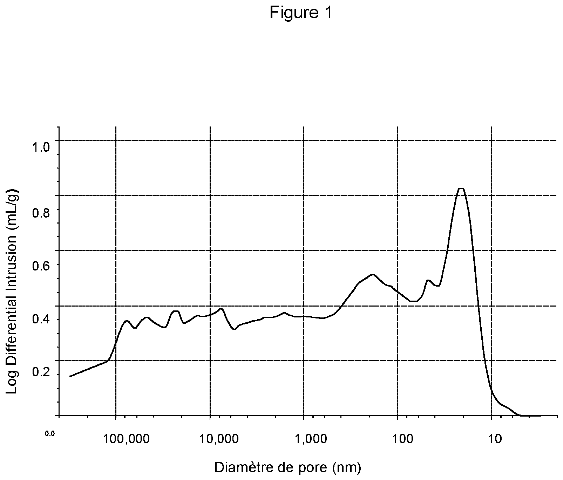

- la figure 1 est une courbe donnant la répartition poreuse d'un produit selon l'invention.

Pour la suite de la description, on entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

Pour la présente description on entend par terre rare les éléments du groupe constitué par l'yttrium et les éléments de la classification périodique de numéro atomique compris inclusivement entre 57 et 71, le cérium étant exclu.

En outre, les calcinations pour une température et une durée données correspondent, sauf indication contraire, à des calcinations sous air à un palier de température sur la durée indiquée.

Les teneurs sont données en masse d'oxyde sauf indication contraire, les oxydes des terres rares étant sous forme Ln₂O₃, Ln désignant la terre rare, à l'exception du praséodyme exprimé sous la forme Pr₆O₁₁.

On précise pour la suite de la description que, sauf indication contraire, dans les fourchettes de valeurs qui sont données, les valeurs aux bornes sont incluses.

Les compositions selon l'invention se caractérisent tout d'abord par la nature de leurs constituants.

Ces compositions sont à base d'oxyde de zirconium et d'au moins un oxyde d'une terre rare qui est différente du cérium. Les compositions de l'invention ne contiennent pas en effet d'oxyde de cérium.

Les compositions de l'invention peuvent être ainsi à base de deux ou trois oxydes, c'est-à-dire dans ce cas que les compositions contiennent des oxydes de deux terres rares autres que le cérium ou encore, selon un mode de réalisation préféré, à base de quatre oxydes, c'est-à-dire dans ce cas que les compositions contiennent trois autres terres rares différentes du cérium.

Les terres rares autres que le cérium sont choisies parmi l'yttrium, le lanthane, le néodyme, le praséodyme ou le gadolinium.

On peut citer plus particulièrement les compositions à base d'oxydes de zirconium et d'yttrium, d'oxydes de zirconium et de lanthane, d'oxydes de zirconium et de gadolinium, ou encore les compositions à base d'oxydes de zirconium, d'yttrium, de néodyme et de lanthane ou bien à base d'oxydes de zirconium, d'yttrium, de praséodyme et de lanthane ou aussi celles à base d'oxydes de zirconium, de lanthane et de gadolinium et d'oxydes de zirconium, d'yttrium et de lanthane.

Selon un mode de réalisation particulier, les compositions de l'invention consistent essentiellement en oxyde de zirconium et en au moins un oxyde d'une terre rare autre que le cérium. Par « consiste essentiellement », on entend que la composition considérée ne contient que les oxydes des éléments précités et qu'elle ne contient pas d'oxyde d'un autre élément, par exemple de cérium ou d'un élément autre qu'une terre rare, susceptible notamment d'avoir une influence positive sur la stabilité de la surface spécifique de la composition. Par contre, la composition peut contenir des éléments tels que des impuretés pouvant notamment provenir de son procédé de préparation, par exemple des matières premières ou des réactifs de départ utilisés.

La teneur en oxyde de zirconium est d'au moins 70%.

La teneur en oxyde de la terre rare autre que le cérium ou des oxydes de l'ensemble des terres rares autres que le cérium est comprise entre 10% et 30%. La teneur des oxydes de l'ensemble des terres rares autres que le cérium peut être notamment entre 10% et 25%.

Comme on l'a vu plus haut, une des caractéristiques principales des compositions de l'invention est leur porosité.

Ainsi, les compositions de l'invention présentent deux populations de pores bien distinctes et qui sont centrées autour des valeurs données plus haut.

On indique ici et pour l'ensemble de la description que les porosités indiquées sont mesurées par porosimétrie par intrusion de mercure conformément à la norme ASTM D 4284-83 (Standard method for determining pore volume distribution of catalysts by mercury intrusion porosimetry).

La méthode de mesure de porosité donnée ci-dessus permet d'établir de manière connues des porogrammes donnant le volume poreux en fonction de la taille des pores (V = f(d), V désignant le volume poreux et d désignant le diamètre des pores). A partir de ce porogramme il est possible d'obtenir, toujours de manière connue, une courbe (C) donnant la dérivée de V en fonction de d. Cette courbe peut présenter des pics en fonction du diamètre des pores.

Au sens de l'invention on entend par « population de pores dont les diamètres sont centrés autour d'une valeur donnée », la présence dans la courbe (C) d'un pic dont le maximum est situé à cette valeur donnée. On peut noter ici que le pic peut se présenter sous la forme d'un épaulement à un pic principal. En outre, il doit être noté que lorsqu'il est indiqué que les compositions de l'invention présentent une ou deux populations de pores cela n'exclut pas qu'il puisse y avoir d'autres populations de pores. En fait les pores qui sont considérées comme caractéristiques de l'invention sont des mésopores voire des macropores c'est-à-dire des pores dont le diamètre est d'au plus 350 nm. En d'autres termes les compositions de l'invention présentent des pores dans un domaine allant d'environ 1 nm à environ 350 nm.

Ainsi, comme indiqué plus haut, après calcination à une température de 900°C pendant 4 heures ces compositions présentent deux populations de pores. La première population correspond à des pores dont les diamètres sont centrés sur une valeur comprise entre 20 nm et 40 nm, notamment entre 20 nm et 35 nm et plus particulièrement entre 20 et 30 nm et encore plus particulièrement autour de 25 nm. La seconde population correspond à des pores dont les diamètres sont centrés sur une valeur comprise entre 80 nm et 200 nm, notamment entre 80 nm et 150 nm et plus particulièrement entre 80 nm et 130 nm. Cette valeur peut être aussi comprise entre 90 nm et 150 nm et plus particulièrement entre 90 nm et 110 nm et encore plus particulièrement autour de 100 nm.

Après calcination à des températures plus élevées, la porosité des compositions de l'invention évolue. Ainsi, après calcination à 1000°C 4 heures, elles présentent une population de pores dont le diamètre est centré sur une valeur comprise entre 30 nm et 40 nm et plus particulièrement autour de 35 nm. A cette température, les compositions de l'invention présentent des pores dans un domaine allant d'environ 1 nm à environ 300 nm.

Par ailleurs, après calcination à 1100°C 4 heures, elles présentent une population de pores dont le diamètre est centré sur une valeur comprise entre 30 nm et 70 nm plus particulièrement autour de 50 nm. A cette température, les compositions de l'invention présentent des pores dans un domaine allant d'environ 1 nm à environ 300 nm.

La présence d'une population de pores centrée sur les valeurs décrites plus haut offre un bon compromis entre la stabilité thermique de la surface spécifique et la diffusion des gaz.

Les compositions de l'invention présentent par ailleurs un volume poreux total d'au moins 1,3 ml Hg/g et plus particulièrement d'au moins 1,5 ml Hg/g, ce volume poreux étant mesuré sur des compositions ayant subi une calcination à une température de 900°C pendant 4 heures. Ce volume poreux total peut être notamment d'au moins 1,6 ml Hg/g, plus particulièrement d'au moins 1,7 ml Hg/g et encore plus particulièrement d'au moins 1,8 ml Hg/g. Dans ces mêmes conditions de calcination des volumes poreux d'au moins environ 2,2 ml Hg/g ou encore d'au moins environ 2,5 ml Hg/g peuvent être obtenus.

Le volume poreux total des compositions mesuré après calcination à 1000°C 4 heures est d'au moins 1,2 ml Hg/g et d'au moins 0,9 ml Hg/g à 1100°C 4 heures. A 1000°C des volumes poreux jusqu'à au moins environ 1,9 ml Hg/g ou encore au moins environ 2,2 ml Hg/g peuvent être obtenus et à 1100°C jusqu'à au moins environ 1,3 ml Hg/g.

Après calcination à 1000°C 4 heures les compositions de l'invention, dans le cas notamment où celles-ci comprennent de l'oxyde de lanthane, peuvent se présenter sous forme de deux phases cristallographiques différentes de nature cubique.

Ces structures cristallographiques sont mises en évidence par les diagrammes en diffraction RX des compositions de l'invention. Ces mêmes diagrammes RX permettent de déterminer par la formule de Scherrer une taille de cristallite mesurée sur les pics les plus intenses d'au plus 8 nm.

Les compositions de l'invention présentent une surface spécifique élevée du fait notamment de leur porosité spécifique.

Ainsi, après calcination à 1100°C 4 heures, elles présentent une surface spécifique d'au moins 25 m²/g, plus particulièrement d'au moins 27 m²/g, notamment dans le cas où la teneur en terres rares autres que le cérium est plus élevée. On peut obtenir dans ces mêmes conditions des valeurs de surface jusqu'à environ 33 m²/g ou encore environ 37 m²/g et pour cette dernière valeur tout particulièrement dans les cas où la teneur en oxyde de l'ensemble des terres rares autres que le cérium est d'au moins 15%.

Après calcination à 1150°C 10 heures elles peuvent présenter une surface spécifique d'au moins 7 m²/g, de préférence d'au moins 10 m²/g. On peut obtenir dans ces mêmes conditions des valeurs de surface jusqu'à environ 18 m²/g ou encore environ 20 m²/g et pour cette dernière valeur tout particulièrement dans les cas où la teneur en oxyde de l'ensemble des terres rares autres que le cérium est d'au moins 15%.

Après calcination à 1200°C 10 heures les compositions de l'invention peuvent présenter une surface spécifique d'au moins 2 m²/g, de préférence d'au moins 4 m²/g et encore plus particulièrement d'au moins 6 m²/g. Des valeurs de surface jusqu'à environ 12 m²/g peuvent être obtenues.

Le procédé de préparation des compositions de l'invention va maintenant être décrit.

Le procédé de l'invention comprend les étapes suivantes :
- (a1) on forme un mélange en phase liquide comprenant soit un composé du zirconium uniquement soit ce composé avec un ou des composés des terres rares autres que le cérium dans une quantité de ce ou ces derniers composés qui est inférieure à la quantité nécessaire pour obtenir la composition recherchée,
- (b1) on met en présence, sous agitation, ledit mélange avec un composé basique;
- (c1) on met en présence, sous agitation, le milieu obtenu à l'étape précédente avec soit les composés des terres rares autres que le cérium si ces composés n'étaient pas présents à l'étape (a1) soit la quantité restante nécessaire desdits composés, l'énergie d'agitation utilisée lors de l'étape (c1) étant inférieure à celle utilisée lors de l'étape (b1), ce par quoi on obtient un précipité;
- (d1) on chauffe en milieu aqueux ledit précipité;
- (e1) on ajoute au précipité obtenu à l'étape précédente un additif choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (f1) on calcine le précipité ainsi obtenu.

La première étape (a1) du procédé consiste donc à préparer un mélange de certains des composés des éléments constitutifs de la composition que l'on cherche à préparer. Le mélange se fait généralement dans un milieu liquide qui est l'eau de préférence.

Cette étape (a1) peut être réalisée selon deux variantes.

Dans le cas de la première variante, qui est une variante préférée, le mélange formé à l'étape (a1) ne comprend, pour ce qui concerne les éléments constitutifs de la composition, c'est-à-dire zirconium et terres rares, que le composé du zirconium.

Dans le cas de la seconde variante le mélange formé à l'étape (a1) comprend, outre le composé du zirconium, un ou des composés des terres rares mais dans une quantité qui est inférieure à la quantité totale stoechiométrique nécessaire des composés de terres rares pour l'obtention de la composition recherchée. Cette quantité peut être plus particulièrement au plus égale à la moitié de la quantité totale.

On notera que cette seconde variante doit s'entendre comme couvrant le cas, pour les compositions où à l'étape (a1) la quantité nécessaire totale de composé d'au moins une des terres rares est présente dès cette étape et où c'est seulement pour au moins une des autres terres rares restantes que la quantité du composé de cette autre terre rare est inférieure à la quantité nécessaire. Il est aussi possible que le composé de cette autre terre rare soit absent à cette étape (a1).

Les composés sont de préférence des composés solubles. Ce peut être notamment des sels de zirconium et de terre rare. Ces composés peuvent être choisis parmi les nitrates, les sulfates, les acétates, les chlorures.

A titre d'exemples, on peut ainsi citer le sulfate de zirconium, le nitrate de zirconyle ou le chlorure de zirconyle.

Le sulfate de zirconyle peut provenir de la mise en solution de sulfate de zirconyle cristallisé. Il peut aussi avoir été obtenu par dissolution de sulfate basique de zirconium avec de l'acide sulfurique, ou bien encore par dissolution d'hydroxyde de zirconium par de l'acide sulfurique. De la même façon, le nitrate de zirconyle peut provenir de la mise en solution de nitrate de zirconyle cristallisé ou bien il peut avoir été obtenu par dissolution de carbonate basique de zirconium ou encore par dissolution d'hydroxyde de zirconium par de l'acide nitrique.

Il est avantageux d'utiliser des sels de pureté d'au moins 99,5% et plus particulièrement d'au moins 99,9%.

On notera ici que les solutions de sels de zirconyle peuvent présenter une certaine acidité libre initiale qui peut être ajustée par l'addition d'une base ou d'un acide. Il est cependant autant possible de mettre en oeuvre une solution initiale de sels de zirconium présentant effectivement une certaine acidité libre comme mentionné ci-dessus, que des solutions qui auront été préalablement neutralisées de façon plus ou moins poussée. Cette neutralisation peut se faire par addition d'un composé basique au mélange précité de manière à limiter cette acidité. Ce composé basique peut être par exemple une solution d'ammoniaque ou encore d'hydroxydes d'alcalins (sodium, potassium,...), mais de préférence une solution d'ammoniaque.

Il peut être avantageux d'utiliser un composé de zirconium sous la forme d'une combinaison ou d'un mélange des sels précités. On peut citer par exemple la combinaison de nitrate de zirconium avec du sulfate de zirconium, ou encore la combinaison de sulfate de zirconium avec le chlorure de zirconyle. Les proportions respectives des différents sels peuvent varier dans une large mesure, depuis 90/10 jusqu'à 10/90 par exemple, ces proportions désignant la contribution de chacun des sels en gramme d'oxyde de zirconium total.

Il est enfin aussi possible d'utiliser un sol comme composé de départ du zirconium. Par sol on désigne tout système constitué de fines particules solides de dimensions colloïdales, c'est à dire des dimensions comprises entre environ 1nm et environ 200 nm, à base d'un composé de zirconium, ce composé étant généralement un oxyde et/ou un oxyde hydraté de zirconium en suspension dans une phase liquide aqueuse.

Les sols ou dispersions colloïdales utilisés peuvent être stabilisés par l'ajout d'ions stabilisateurs.

Ces dispersions colloïdales peuvent être obtenues par n'importe quel moyen connu par l'homme du métier. En particulier, on peut citer la dissolution partielle de précurseur de zirconium. Par partielle on entend que la quantité d'acide mise en oeuvre dans la réaction d'attaque du précurseur est inférieure à la quantité exigée pour la mise en dissolution totale du précurseur.

Les dispersions colloïdales peuvent également être obtenues par traitement hydrothermal de solutions de précurseurs de zirconium. Le mélange peut être indifféremment obtenu soit à partir de composés initialement à l'état solide que l'on introduira par la suite dans un pied de cuve d'eau par exemple, soit encore directement à partir de solutions ou suspensions de ces composés puis mélange, dans un ordre quelconque, desdites solutions ou suspensions.

Dans la deuxième étape (b1) du procédé, on met en présence ledit mélange avec un composé basique pour les faire réagir. On peut utiliser comme base ou composé basique les produits du type hydroxyde. On peut citer les hydroxydes d'alcalins ou d'alcalino-terreux. On peut aussi utiliser les amines secondaires, tertiaires ou quaternaires. Toutefois, les amines et l'ammoniaque peuvent être préférées dans la mesure où ils diminuent les risques de pollution par les cations alcalins ou alcalino terreux. On peut aussi mentionner l'urée.

Le composé basique peut être plus particulièrement utilisé sous forme d'une solution. Enfin, il peut être utilisé avec un excès stoechiométrique pour s'assurer d'une précipitation optimale.

Cette mise en présence se fait sous agitation. Elle peut être effectuée de manière quelconque, par exemple par l'addition d'un mélange préalablement formé des composés des éléments précités dans le composé basique sous forme d'une solution.

Préalablement à la réalisation de l'étape suivante du procédé, il est possible d'ajuster le pH du milieu obtenu à l'issue de l'étape précédente (b1) par ajout d'acide dans cette suspension. On peut citer l'acide nitrique, l'acide acétique, l'acide sulfurique ou l'acide chlorhydrique. L'acide nitrique est utilisé de préférence. Lorsqu'un ajustement de pH est mis en oeuvre, le pH final est compris entre 5 et 10, préférentiellement entre 6 et 8.

L'étape suivante (c1) du procédé consiste à mettre en présence le milieu issu de l'étape (b1) précédente avec les composés des terres rares. Dans le cas de la première variante mentionnée plus haut dans laquelle le mélange de départ formé à l'étape (a1) ne comprend, en tant qu'éléments constitutifs de la composition, que le composé du zirconium, ces composés sont donc introduits pour la première fois dans le procédé et dans la quantité totale stoechiométrique nécessaire de ces terres rares. Dans le cas de la seconde variante dans laquelle le mélange formé à l'étape (a1) comprend déjà un ou des composés des terres rares il s'agit donc de la quantité restante nécessaire de ces composés ou, éventuellement, de la quantité nécessaire du composé d'une terre rare si ce composé n'était pas présent à l'étape (a1).

Cette mise en présence peut être effectuée de manière quelconque, par exemple par l'addition d'un mélange préalablement formé des composés des terres rares dans le mélange obtenu à l'issue de l'étape (b1). Elle se fait aussi sous agitation mais dans des conditions telles que l'énergie d'agitation utilisée lors de cette étape (c1) est inférieure à celle utilisée lors de l'étape (b1). Plus précisément l'énergie mise en oeuvre lors de l'étape (c1) est inférieure d'au moins 20% à celle de l'étape (b1) et elle peut être plus particulièrement inférieure à 40% et encore plus particulièrement à 50% de celle-ci.

A l'issue de l'étape (c1) le milieu réactionnel est sous la forme d'un solide ou précipité en suspension dans une phase liquide.

L'étape suivante (d1) du procédé est l'étape de chauffage de ce précipité dans ce milieu.

Ce chauffage peut être réalisé directement sur le milieu réactionnel obtenu à l'issue de l'étape (c1) ou sur une suspension obtenue après séparation du précipité du milieu réactionnel, lavage éventuel et remise dans l'eau du précipité. La température à laquelle est chauffé le milieu est d'au moins 100°C et encore plus particulièrement d'au moins 130°C. Elle peut être comprise par exemple entre 100°C et 160°C. L'opération de chauffage peut être conduite en introduisant le milieu liquide dans une enceinte close (réacteur fermé du type autoclave). Dans les conditions de températures données ci-dessus, et en milieu aqueux, on peut ainsi préciser, à titre illustratif, que la pression dans le réacteur fermé peut varier entre une valeur supérieure à 1 Bar (10⁵ Pa) et 165 Bar (1,65. 10⁷ Pa), de préférence entre 5 Bar (5. 10⁵ Pa) et 165 Bar (1,65. 10⁷ Pa). On peut aussi effectuer le chauffage dans un réacteur ouvert pour les températures voisines de 100°C.

Le chauffage peut être conduit soit sous air, soit sous atmosphère de gaz inerte, de préférence l'azote.

La durée du chauffage peut varier dans de larges limites, par exemple entre 1 et 48 heures, de préférence entre 2 et 24 heures. De même, la montée en température s'effectue à une vitesse qui n'est pas critique, et on peut ainsi atteindre la température réactionnelle fixée en chauffant le milieu par exemple entre 30 minutes et 4 heures, ces valeurs étant données à titre tout à fait indicatif.

Il est possible de faire plusieurs chauffages. Ainsi, on peut remettre en suspension dans l'eau, le précipité obtenu après l'étape de chauffage et éventuellement un lavage puis effectuer un autre chauffage du milieu ainsi obtenu. Cet autre chauffage se fait dans les mêmes conditions que celles qui ont été décrites pour le premier.

L'étape suivante (e1) du procédé consiste à ajouter au précipité issu de l'étape précédente un additif qui est choisi parmi les tensioactifs anioniques, les tensioactifs non ioniques, les polyéthylène-glycols et les acides carboxyliques et leurs sels ainsi que les tensioactifs du type éthoxylats d'alcools gras carboxyméthylés.

En ce qui concerne cet additif on pourra se référer à l'enseignement de la demande WO-98/45212 et utiliser les tensioactifs décrits dans ce document.

On peut mentionner comme tensioactifs du type anionique les éthoxycarboxylates, les acides gras éthoxylés, les sarcosinates, les esters phosphates, les sulfates comme les sulfates d'alcool les sulfates d'éther alcool et les éthoxylates d'alcanolamide sulfatés, les sulfonates comme les sulfosuccinates, les alkyl benzène ou alkyl naphtalène sulfonates.

Comme tensioactifs non ioniques on peut mentionner les tensioactifs acétyléniques, les éthoxylates d'alcool, les alcanolamides, les oxydes d'amine, les alcanolamides éthoxylés, les amines éthoxylées à longues chaînes, les copolymères oxyde d'éthylène/oxyde de propylène, les dérivés du sorbiatan, l'éthylène glycol, le propylène glycol, le glycérol, les esters polyglyceryle et leurs dérivés éthoxylés, les alkylamines, les alkylimidazolines, les huiles éthoxylées et les éthoxylates d'alkylphénol. On peut citer notamment les produits vendus sous les marques IGEPAL®, DOWANOL®, RHODAMOX® et ALKAMIDE®,

En ce qui concerne les acides carboxyliques, on peut utiliser notamment les acides mono- ou dicarboxyliques aliphatiques et parmi ceux-ci plus particulièrement les acides saturés. On peut utiliser aussi des acides gras et plus particulièrement les acides gras saturés. On peut citer ainsi notamment les acides formique, acétique, proprionique, butyrique, isobutyrique, valérique, caproïque, caprylique, caprique, laurique, myristique, palmitique. Comme acides dicarboxyliques, on peut mentionner les acides oxalique, malonique, succinique, glutarique, adipique, pimélique, subérique, azélaïque et sébacique.

Les sels des acides carboxyliques peuvent aussi être utilisés, notamment les sels ammoniacaux.

A titre d'exemple, on peut citer plus particulièrement l'acide laurique et le laurate d'ammonium.

Enfin, il est possible d'utiliser un tensioactif qui est choisi parmi ceux du type éthoxylats d'alcools gras carboxyméthylés.

Par produit du type éthoxylats d'alcool gras carboxyméthylés on entend les produits constitués d'alcools gras éthoxylés ou propoxylés comportant en bout de chaîne un groupement CH₂-COOH.

Ces produits peuvent répondre à la formule :

R₁-O-(CR₂R₃-CR₄R₅-O)ₙ-CH₂-COOH

dans laquelle R₁ désigne une chaîne carbonée, saturée ou insaturée, dont la longueur est généralement d'au plus 22 atomes de carbone, de préférence d'au moins 12 atomes de carbone; R₂, R₃, R₄ et R₅ peuvent être identiques et représenter l'hydrogène ou encore R₂ peut représenter un groupe CH₃ et R₃, R₄ et R₅ représentent l'hydrogène; n est un nombre entier non nul pouvant aller jusqu'à 50 et plus particulièrement compris entre 5 et 15, ces valeurs étant incluses. On notera qu'un tensio-actif peut être constitué d'un mélange de produits de la formule ci-dessus pour lesquels R₁ peut être saturé et insaturé respectivement ou encore des produits comportant à la fois des groupements -CH₂-CH₂-O- et -C(CH₃)-CH₂-O-.

L'addition du tensio-actif peut se faire de deux manières. Il peut être ajouté directement dans la suspension de précipité issue de l'étape précédente de chauffage (d1). Il peut aussi être ajouté au précipité solide après séparation de celui-ci par tout moyen connu du milieu dans lequel a eu lieu le chauffage.

La quantité de tensio-actif utilisée, exprimée en pourcentage en masse d'additif par rapport à la masse de la composition calculée en oxyde, est généralement comprise entre 5% et 100% plus particulièrement entre 15% et 60%.

Selon une autre variante avantageuse de l'invention, avant de mettre en oeuvre la dernière étape du procédé (étape de calcination), on procède à un lavage du précipité après l'avoir séparé du milieu dans lequel il se trouvait en suspension. Ce lavage peut se faire à l'eau, de préférence avec de l'eau à pH basique, par exemple de l'eau ammoniaquée.

Dans une dernière étape du procédé, le précipité récupéré est ensuite calciné. Cette calcination permet de développer la cristallinité du produit formé et elle peut être également ajustée et/ou choisie en fonction de la température d'utilisation ultérieure réservée à la composition selon l'invention, et ceci en tenant compte du fait que la surface spécifique du produit est d'autant plus faible que la température de calcination mise en oeuvre est plus élevée. Une telle calcination est généralement opérée sous air, mais une calcination menée par exemple sous gaz inerte ou sous atmosphère contrôlée (oxydante ou réductrice) n'est bien évidemment pas exclue.

En pratique, on limite généralement la température de calcination à un intervalle de valeurs comprises entre 500 et 900°C plus particulièrement entre 700°C et 800°C.

La durée de la calcination n'est pas critique et dépend de la température. A titre purement indicatif elle peut être d'au moins 2 heures plus particulièrement d'au moins 4 heures.

Deux modes de réalisation alternatifs du procédé vont être décrits mais ils ne font pas partie de l'invention.

Le procédé selon le second mode comprend les étapes suivantes :
- (a2) on met en présence en phase liquide un composé du zirconium avec un composé basique ce par quoi on forme un précipité;
- (b2) on chauffe en milieu aqueux ledit précipité;
- (c2) on ajoute au précipité obtenu à l'étape précédente un additif choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (d2) on calcine le précipité issu de l'étape précédente à une température d'au plus 500°C;
- (e2) on forme un mélange en phase liquide comprenant le produit issu de l'étape précédente et un ou des composés des terres rares autres que le cérium;
- (f2) on met en présence ce mélange avec un composé basique;
- (g2) on chauffe en milieu aqueux le produit solide issu de l'étape précédente;
- (h2) on calcine le produit obtenu à l'issue de l'étape précédente.

L'étape (a2) est semblable à l'étape (a1) du premier mode de réalisation décrit plus haut, de sorte que tout ce qui a été décrit pour l'étape (a1), notamment en ce qui concerne la nature des composés de zirconium s'applique de même ici. De même qu'à l'issue de l'étape (a1) on obtient ici un précipité. L'étape (b2) est par ailleurs conduite dans les mêmes conditions que celle données pour l'étape (d1) du premier mode. Il en est de même aussi pour l'étape (c2), c'est-à-dire que l'on utilise les mêmes types d'additif que ceux décrits au sujet de l'étape (e1) et dans les mêmes conditions. A l'issue de l'addition de l'additif on peut, comme dans le mode de réalisation précédent, procéder à un lavage du précipité.

Enfin, après séparation du produit solide du milieu liquide obtenu à l'issue de l'étape (c2), on effectue une calcination de ce produit dans des conditions semblables à celles décrites pour l'étape (f1) mais dans une gamme de température généralement plus faible. Ainsi, la température de calcination à l'étape (d2) est d'au plus 500°C. Elle peut être par exemple comprise entre 150°C et 500°C, plus particulièrement entre 200°C et 300°C.

Le procédé du second mode comporte des étapes complémentaires dans lesquelles sont mis en oeuvre le ou les composés des terres rares autres que le cérium. Ce qui a été décrits au sujet de ces composés pour le premier mode s'applique de même ici.

Dans une étape (e2) on forme un mélange en phase liquide comprenant le produit issu de l'étape précédente (d2) et un ou des composés des terres rares autres que le cérium. On met en présence ensuite (étape (f2)) ce mélange avec un composé basique du même type que celui décrit plus haut par exemple pour l'étape (b1) et il est possible d'utiliser le composé basique avec un excès stoechiométrique.

On obtient à l'issue de l'étape (f2) un milieu liquide contenant un solide ou précipité en suspension qui, dans l'étape suivante (g2), est chauffé dans les même conditions que celles préalablement décrites pour l'étape (d1).

Dans une dernière étape (h2), on récupère par tout moyen connu le solide ou précipité obtenu à l'issue de l'étape précédente et on lui fait subir une calcination. Les conditions de cette calcination peuvent être identiques à celles décrites pour l'étape (f1).

Le procédé selon le 3^{ème} mode (ne faisant pas partie de l'invention) comprend les étapes suivantes :
- (a3) on met en présence en phase liquide avec un composé basique soit un composé du zirconium uniquement soit ce composé avec un ou des composés des terres rares autres que le cérium dans une quantité de ce ou ces derniers composés qui est inférieure à la quantité nécessaire pour obtenir la composition recherchée, ce par quoi on forme un précipité;
- (b3) on chauffe en milieu aqueux ledit précipité;
- (c3) on met en présence le milieu obtenu à l'étape précédente soit avec un ou des composés des terres rares autres que le cérium si ces composés n'étaient pas présents à l'étape (a3) soit avec la quantité restante nécessaire desdits composés;
- (d3) on met en présence le milieu obtenu à l'étape précédente avec un composé basique;
- (e3) on ajoute au précipité obtenu à l'étape précédente un additif choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (f3) on calcine le précipité ainsi obtenu.

Le procédé de ce troisième mode est proche de celui du premier mode mais il s'en distingue essentiellement par l'ordre des étapes. De ce fait, ce qui a été décrit plus haut pour les étapes (a1) combinée avec (b1), (d1) et (f1), s'applique aux étapes (a3), b(3) et (f3) respectivement. En outre la description précédente pour les composés de terres rares, l'additif du type tensioactif, le composé basique et plus généralement les conditions de mise en oeuvre des étapes (c1), (b1) et (e1) s'applique de même ici pour les étapes (c3), (d3) et (e3).

Des variantes sont envisageables pour chacun des trois modes de réalisation de procédé décrits plus haut, ces variantes pouvant permettre un contrôle de la distribution des pores.

Ainsi, il est possible d'ajuster la force ionique du mélange en phase liquide des étapes (a1) ou (a3) avant sa mise en présence avec le composé basique. Il est aussi possible de former une solution du composé du zirconium préalablement à l'étape (a2) et d'ajuster la force ionique de cette solution avant de la mettre en présence du composé basique. Cet ajustement de la force ionique est réalisé par addition audit mélange ou à ladite solution d'ions supplémentaires choisis parmi les ions sulfates, chlorures et nitrates, par exemple par addition d'acide sulfurique ou de sulfate d'ammonium dans une solution de nitrate de zirconyle, de chlorure de zirconyle, ou d'un mélange des deux.

On peut encore utiliser le composé basique de l'une des étapes (b1), (a2) ou (a3) sous forme d'une solution dont on ajuste la force ionique avant la précipitation par addition à ladite solution d'un sel choisi parmi le nitrate d'ammonium, le sulfate d'ammonium ou le chlorure d'ammonium.

La quantité d'ions ajoutée lors de cet ajustement de la force ionique peut varier dans une large mesure. Exprimée en nombre de moles d'ions ajoutées par nombre de moles d'ions zirconium présentes, elle peut varier de 0,1 à 2.

Les compositions de l'invention telles que décrites plus haut ou telles qu'obtenues par le procédé de préparation selon l'invention se présentent sous forme de poudres mais elles peuvent éventuellement être mises en forme pour se présenter sous forme de granulés, billes, cylindres ou nids d'abeille de dimensions variables.

Ces compositions peuvent être utilisées avec tout matériau employé habituellement dans le domaine de la formulation de catalyseur, c'est à dire notamment des matériaux inertes thermiquement. Ce matériau peut être choisi parmi l'alumine, l'oxyde de titane, l'oxyde de cérium, l'oxyde de zirconium, la silice, les spinelles, les zéolites, les silicates, les phosphates de silicoaluminium cristallins, les phosphates d'aluminium cristallins.

Les compositions peuvent aussi être utilisées dans des systèmes catalytiques comprenant un revêtement (wash coat) à propriétés catalytiques et à base de ces compositions avec un matériau du type de ceux mentionnés plus haut, le revêtement étant déposé sur un substrat du type par exemple monolithe métallique, par exemple FerCralloy, ou en céramique, par exemple en cordiérite, en carbure de silicium, en titanate d'alumine ou en mullite.

Ce revêtement est obtenu par mélange de la composition avec le matériau de manière à former une suspension qui peut être ensuite déposée sur le substrat.

Ces systèmes catalytiques et plus particulièrement les compositions de l'invention peuvent trouver de très nombreuses applications.

Ils sont ainsi particulièrement bien adaptés à, et donc utilisable dans la catalyse de diverses réactions telles que, par exemple, la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion, l'oxydation catalytique des suies émises par les moteurs à combustion interne comme les moteurs diesel ou essence fonctionnant en régime pauvre.

Les systèmes catalytiques et les compositions de l'invention peuvent enfin être utilisés comme pièges à NOx ou pour favoriser la réduction des NOx même en milieu oxydant.

Dans le cas de ces utilisations en catalyse, les compositions de l'invention sont employées en combinaison avec des métaux précieux, elles jouent ainsi le rôle de support pour ces métaux. La nature de ces métaux et les techniques d'incorporation de ceux-ci dans les compositions supports sont bien connues de l'homme du métier. Par exemple, les métaux peuvent être le platine, le rhodium, le palladium ou l'iridium, ils peuvent notamment être incorporés aux compositions par imprégnation.

Parmi les utilisations citées, le traitement des gaz d'échappement des moteurs à combustion interne (catalyse post combustion automobile) constitue une application particulièrement intéressante. Pour ce traitement, les produits de l'invention peuvent apporter une l'efficacité améliorée à basses températures.

De ce fait, l'invention concerne aussi un procédé de traitement des gaz d'échappement des moteurs à combustion interne qui est caractérisé en ce qu'on utilise à titre de catalyseur un système catalytique tel que décrit ci-dessus ou une composition selon l'invention et telle que décrite précédemment.

Des exemples vont maintenant être donnés.

Dans les exemples 1 à 4 on utilise les solutions de sels de caractéristiques suivantes :
- nitrate de zirconium [ZrO₂] = 260 g/l et d = 1,403
- nitrate de lanthane [La₂O₃] = 451 g/l et d = 1,687
- nitrate d'yttrium [Y₂O₃] = 371 g/l et d =1,658
- nitrate de néodyme [Nd₂O₃] = 519 g/l et d =1,76

### EXEMPLE 1 (selon l'invention)

Cet exemple concerne la préparation selon le procédé de l'invention d'une composition à base d'oxydes de zirconium, de lanthane, d'yttrium et de néodyme dans les proportions respectives en pourcentage massique des oxydes suivantes : 83,3% - 2.2% - 8,9% - 5,6%.

On prépare au préalable deux solutions de nitrates, la première constituée de nitrate de zirconium et la seconde constituée de nitrates de lanthane, d'yttrium et de néodyme.

Dans un premier bécher on introduit 0,359 l d'eau avec 0,307 l de solution de nitrate de zirconium. Dans un second bécher sont introduits 95,5 ml d'eau, 4,7 ml de solution de nitrate de lanthane, 23 ml de solution de nitrate d'yttrium et 10,4 ml de solution de nitrate de néodyme.

Dans un réacteur équipé d'un mobile d'agitation à pales inclinées, on introduit une solution d'ammoniaque (12 mol/l) et on complète ensuite avec de l'eau distillée de façon à obtenir un volume total de 0,8 litre et un excès stoechiométrique en ammoniaque de 40% par rapport aux cations à précipiter.

On maintient sous agitation constante les deux solutions préparées précédemment.

Dans un premier temps la première solution de nitrate est introduite en 60 minutes dans le réacteur agité à une vitesse de 500 tr/min.

Dans un deuxième temps la seconde solution de nitrates est introduite en 15 minutes dans le réacteur et l'agitation est fixée à 250 tr/min.

La suspension de précipité ainsi obtenue est placée dans un autoclave en acier inoxydable équipé d'un mobile d'agitation. La température du milieu est portée à 150°C pendant 2 heures sous agitation.

On ajoute à la suspension ainsi obtenue 33 grammes d'acide laurique. La suspension est maintenue sous agitation pendant 1 heure.

La suspension est alors filtrée sur Büchner, puis lavée avec de l'eau ammoniaquée.

Le produit obtenu est ensuite porté à 700°C pendant 4 heures de palier.

### EXEMPLE 2 COMPARATIF

Cet exemple concerne la préparation d'une composition identique à celle de l'exemple 1 mais par un procédé de l'art antérieur.

On prépare au préalable une solution de nitrates de zirconium, de lanthane, d'yttrium et de néodyme.

Dans le bécher on introduit avec 0,307 l de solution de nitrate de zirconium, 4,7 ml de solution de nitrate de lanthane, 23 ml de solution de nitrate d'yttrium et 10,4 ml de solution de nitrate de néodyme et enfin 455 ml d'eau.

Dans un réacteur équipé d'un mobile d'agitation à pales inclinées, on introduit une solution d'ammoniaque (12 mol/l) et on complète ensuite avec de l'eau distillée de façon à obtenir un volume total de 0,8 litre et un excès stoechiométrique en ammoniaque de 40% par rapport aux cations à précipiter.

On maintient sous agitation constante la solution préparée précédemment.

La solution de nitrates de zirconium, de lanthane, d'yttrium et de néodyme est introduite dans le réacteur agité à une vitesse de 500 tr/min.

La suspension de précipité ainsi obtenue est placée dans un autoclave et on procède ensuite (autoclavage, addition d'acide laurique, lavage et calcination) comme dans l'exemple 1.

On donne dans le tableau 1 ci-dessous pour les compositions de chacun des exemples précédents les surfaces spécifiques après calcination aux durées et températures indiquées.

Les calcinations à 900°C et aux autres températures jusqu'à 1200°C ont été faites sur les produits obtenus à l'issue du procédé décrit dans les exemples, c'est-à-dire des produits qui ont déjà subi une première calcination à 700°C.

**Tableau 1**

| Surface spécifique (m²/g) | 4 h | 4 h | 4 h | 4h | 10h | 10H |
|---|---|---|---|---|---|---|
| | 700°C | 900°C | 1000°C | 1100°C | 1150°C | 1200°C |
| Exemple | | | | | | |
| 1 | 75 | 64,6 | 48,3 | 27 | 11,8 | 2,6 |
| 2 comparatif | | 66,5 | 46,5 | 21,6 | 6,2 | 1,1 |

On donne dans le tableau 2 ci-dessous pour les compositions de chacun des exemples précédents le volume poreux total et la taille des pores.

Ces caractéristiques de porosités sont celles mesurées sur des compositions qui ont été calcinées à 900°C 4 heures après avoir été soumises à la première calcination à 700°C lors de leur préparation par le procédé décrit dans les exemples.

Les mesures de porosimétrie ont été effectuées en utilisant un porosimètre Autopore 9420 MICROMERITICS avec un pénétromètre n° 08.

L'angle de contact entre l'échantillon et le mercure est fixé à 130°C. Les échantillons d'environ 200 mg ont été dégazés en étuve pendant 2 heures à 200°C avant pesée et analyse.

Les valeurs qui figurent dans la colonne « taille des pores » correspondent aux diamètres autour desquels sont centrées les populations de pores, l'indication d'une seule valeur indiquant la présence d'une seule population et l'indication de deux valeurs indiquant la présence de deux populations.

La figure 1 est obtenu à partir d'un porogramme du produit de l'exemple 1.

Cette figure présente une courbe qui est la dérivée du volume poreux en fonction du diamètre des pores.

**Tableau 2**

| Exemple | Volume poreux total (ml Hg/g) | Taille des pores (nm) |
|---|---|---|
| 1 | 1,7 | 25 et 120 |
| 2 comparatif | 1,3 | 25 |

### Structure cristallographique

Après calcination à 1000°C 4 heures, la composition de l'exemple 1 présente deux phases cristallographiques distinctes dont au moins une est cubique et celle de l'exemple 2 une phase unique.

### EXEMPLE 3 (non couvert par l'invention)

Cet exemple concerne la préparation d'une composition identique à celle de l'exemple 1 mais selon le second mode de réalisation du procédé.

Dans un réacteur contenant de l'eau et une solution d'ammoniaque (12 mol/l) dans une quantité correspondant à un excès stoechiométrique en ammoniaque de 40% par rapport aux cations à précipiter, on introduit sous agitation 0,359 l de la solution de nitrate de zirconium présentant les caractéristiques décrites plus haut. La teneur en zirconium dans le réacteur, exprimée en oxyde, est de 50 g/l.

On obtient une suspension de précipité qui est placée dans un autoclave en acier inoxydable équipé d'un mobile d'agitation.

La température du milieu est portée à 150°C pendant 2 heures sous agitation.

On ajoute à la suspension ainsi obtenue 33 grammes d'acide laurique. La suspension est maintenue sous agitation pendant 1 heure.

La suspension est alors filtrée sur Büchner, puis lavée avec de l'eau ammoniaquée.

Le produit obtenu est ensuite porté à 300°C pendant 4 heures de palier.

Le produit résultant est mis ensuite en suspension dans un bécher contenant 95,5 ml d'eau, 4,7 ml, 23 ml et 10,4 ml respectivement des solutions de nitrate de lanthane, de nitrate d'yttrium et de nitrate de néodyme présentant les caractéristiques décrites plus haut.

De l'ammoniaque dans un excès stoechiométrique de 40% par rapport aux cations à précipiter est alors introduit.

La suspension de précipité ainsi obtenue est placée dans un autoclave en acier inoxydable équipé d'un mobile d'agitation.

La température du milieu est portée à 150°C pendant 2 heures sous agitation.

La suspension est alors filtrée sur Büchner, puis lavée avec de l'eau ammoniaquée.

Le produit obtenu est ensuite porté à 700°C pendant 4 heures de palier.

### EXEMPLE 4 (non couvert l'invention)

Cet exemple concerne la préparation d'une composition identique à celle de l'exemple 1 mais selon le troisième mode de réalisation du procédé.

Dans un réacteur contenant de l'eau et une solution d'ammoniaque (12 mol/l) dans une quantité correspondant à un excès stoechiométrique en ammoniaque de 40% par rapport aux cations à précipiter, on introduit sous agitation 0,359 l de la solution de nitrate de zirconium présentant les caractéristiques décrites plus haut.

La teneur en zirconium dans le réacteur, exprimée en oxyde, est de 50 g/l.

On obtient une suspension de précipité qui est placée dans un autoclave en acier inoxydable équipé d'un mobile d'agitation.

La température du milieu est portée à 150°C pendant 2 heures sous agitation.

On ajoute à la suspension ainsi obtenue 95,5 ml d'eau, 4,7 ml, 23 ml et 10,4 ml respectivement des solutions de nitrate de lanthane, de nitrate d'yttrium et de nitrate de néodyme présentant les caractéristiques décrites plus haut.

De l'ammoniaque dans un excès stoechiométrique de 40% par rapport aux cations à précipiter est alors introduit.

On ajoute à la suspension ainsi obtenue 33 grammes d'acide laurique. La suspension est maintenue sous agitation pendant 1 heure.

La suspension est alors filtrée sur Büchner, puis lavée avec de l'eau ammoniaquée.

Le produit obtenu est ensuite porté à 700°C pendant 4 heures de palier.

Les produits des exemples 3 et 4 présentent après calcination à 900°C 4 heures, deux populations de pores.

### EXEMPLE 5

Cet exemple décrit un test catalytique pour un catalyseur préparé à partir d'une composition selon l'invention.

### a) Préparation du catalyseur

Le catalyseur à 0,1% en masse d'élément rhodium métallique par rapport à la masse de l'ensemble du catalyseur est préparé par imprégnation de nitrate de rhodium par voie humide sur le produit de l'exemple 1 qui a été soumis à un traitement thermique complémentaire à 500°C 4 heures.

On fait subir ensuite au produit imprégné une évaporation lente, un séchage et enfin une calcination 4 heures à 500°C sous air.

Le catalyseur sous forme de poudre est ensuite vieilli pendant 6 heures à 1100°C sous un mélange oxydo réducteur (flux alternés de 5 minutes de 1,8% de CO et 10% de H₂O d'une part puis de 1,8% de O₂ et 10% de H₂O d'autre part).

Le vieillissement se fait dans un réacteur tubulaire en quartz, traversé par le flux de gaz.

### b) Conditions de test

Débit des gaz : 30l/h
Masse de catalyseur : 20 mg (fraction granulométrique 100-200 microns) dilué avec 150 mg de SiC.

La composition des gaz est donnée dans le tableau 3 ci-dessous.

**Tableau 3**

| Composant | Mélange pauvre | Mélange riche |
|---|---|---|
| | Richesse : 0,979 % en volume | Richesse : 1,024 % en volume |
| CO₂ | 14,00 | 14,00 |
| H₂O | 10,00 | 10,00 |
| CO | 0,40 | 1,40 |
| O₂ | 0,80 | 0,40 |
| C₃H₆ | 0,0375 | 0,0375 |
| C₃H₈ | 0,0125 | 0,0125 |
| NO | 0,095 | 0,095 |
| N₂ | Complément à 100 | Complément à 100 |

On donne dans le tableau 4 ci-dessous, les résultats du test catalytique.

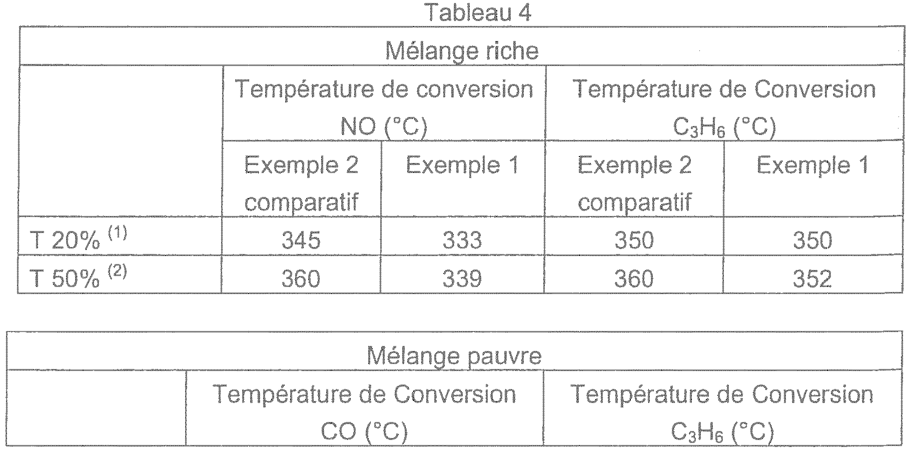

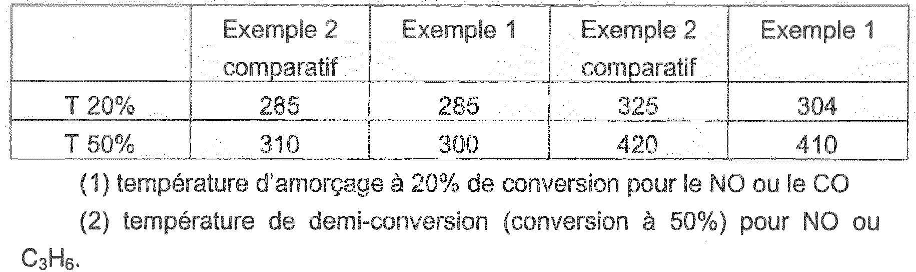

En mélange riche, les températures d'amorçage et de demi conversion sont soit identiques soit plus faibles pour le catalyseur selon l'invention que pour le catalyseur obtenu à partir d'un produit de l'art antérieur. Il en est de même pour la température d'amorçage en mélange pauvre.

L'ensemble de ces résultats montre l'efficacité améliorée à basses températures des catalyseurs à base des compositions de l'invention.

Dans les exemples 6 et 7 qui suivent on utilise les solutions de sels de caractéristiques suivantes :
- nitrate de zirconium [ZrO₂] = 265 g/l et d = 1,408
- nitrate de lanthane [La₂O₃] = 454 g/l et d = 1,687
- nitrate d'yttrium [Y₂O₃] = 361 g/l et d =1,65
- nitrate de néodyme [Nd₂O₃] = 484 g/l et d =1,743

### EXEMPLE 6 (selon l'invention)

Cet exemple concerne la préparation selon le procédé de l'invention d'une composition à base d'oxydes de zirconium, de lanthane, d'yttrium et de néodyme dans les proportions respectives suivantes en pourcentage massique des oxydes : 80% - 4% - 8% - 8%.

On prépare au préalable deux solutions de nitrates l'une constituée de nitrate de zirconium et l'autre de nitrates de lanthane, d'yttrium et de néodyme.

Dans un premier bécher on introduit 373 ml d'eau avec 266 ml de solution de nitrate de zirconium. Dans un second bécher sont introduits 82 ml d'eau, 8,2 ml de solution de nitrate de lanthane, 29,4 ml de solution de nitrate d'yttrium et 15,9 ml de solution de nitrate de néodyme.

Dans un réacteur équipé d'un mobile d'agitation à pales inclinées, on introduit sous agitation une solution d'ammoniaque (12 mol/l) et on complète ensuite avec de l'eau distillée de façon à obtenir un volume total de 0,8 litre et un excès stoechiométrique en ammoniaque de 40% par rapport aux cations à précipiter.

On maintient sous agitation constante les deux solutions préparées précédemment. La première solution de nitrate est introduite en 45 minutes dans le réacteur agité à une vitesse de 500 tr/min, la seconde solution de nitrates est ensuite introduite en 15 minutes et l'agitation est fixée à 150 tr/min.

La suspension de précipité ainsi obtenue est placée dans un autoclave en acier inoxydable équipé d'un mobile d'agitation. La température du milieu est portée à 150°C pendant 2 heures sous agitation.

On ajoute à la suspension ainsi obtenue 33 grammes d'acide laurique. La suspension est maintenue sous agitation pendant 1 heure.

La suspension est alors filtrée sur Büchner, puis lavée avec de l'eau ammoniaquée.

Le produit obtenu est ensuite calciné à 700°C pendant 4 heures de palier.

### EXEMPLE 7 (selon l'invention)

Cet exemple concerne la préparation selon le procédé de l'invention d'une composition à base d'oxydes de zirconium, de lanthane, d'yttrium dans les proportions respectives suivantes en pourcentage massique des oxydes : 85% - 5% - 10%.

On prépare au préalable deux solutions de nitrates l'une constituée de nitrate de zirconium et l'autre de nitrates de lanthane et d'yttrium.

Dans un premier bécher on introduit 396 ml d'eau avec 283 ml de solution de nitrate de zirconium. Dans un second bécher sont introduits 82 ml d'eau, 10,2 ml de solution de nitrate de lanthane et 36,8 ml de solution de nitrate d'yttrium.

Dans un réacteur équipé d'un mobile d'agitation à pales inclinées, on introduit sous agitation une solution d'ammoniaque (12 mol/l) et on complète ensuite avec de l'eau distillée de façon à obtenir un volume total de 0,8 litre et un excès stoechiométrique en ammoniaque de 40% par rapport aux cations à précipiter.

On maintient sous agitation constante les deux solutions préparées précédemment. La première solution de nitrates est introduite en 45 minutes dans le réacteur agité à une vitesse de 500 tr/min, la seconde solution de nitrates est introduite en 15 minutes et l'agitation est fixée à 150 tr/min.

La suspension de précipité ainsi obtenue est placée dans un autoclave en acier inoxydable équipé d'un mobile d'agitation. La température du milieu est portée à 150°C pendant 2 heures sous agitation.

On ajoute à la suspension ainsi obtenue 33 grammes d'acide laurique. La suspension est maintenue sous agitation pendant 1 heure.

La suspension est alors filtrée sur Büchner, puis lavée avec de l'eau ammoniaquée.

Le produit obtenu est ensuite calciné à 700°C pendant 4 heures de palier.

On donne dans le tableau 5 ci-dessous pour les compositions de chacun des exemples 6 et 7 les surfaces spécifiques après calcination aux durées et températures indiquées.

Les calcinations à 900°C et aux autres températures jusqu'à 1200°C ont été faites sur les produits obtenus à l'issue du procédé décrit dans les exemples, c'est-à-dire des produits qui ont déjà subi une première calcination à 700°C.

**Tableau 5**

| Surface spécifique (m²/g) Exemple | 4h | 4h | 4h | 10h | 10h |
|---|---|---|---|---|---|
| | 900°C | 1000°C | 1100°C | 1150°C | 1200°C |
| 6 | 65 | 50 | 33 | 15 | 5 |
| 7 | 58 | 50 | 26 | 13 | 4 |

On donne dans le tableau 6 ci-dessous pour les compositions de chacun des exemples 6 et 7 le volume poreux total mesuré sur des compositions qui ont été calcinées à 900°C 4 heures après avoir été soumises à la première calcination à 700°C lors de leur préparation par le procédé décrit dans les exemples. La mesure de porosimétrie a été effectuée avec le même appareillage et dans les mêmes conditions que celles données pour les produits des exemples 1 et 2.

**Tableau 6**

| Exemple | Volume poreux total (ml Hg/g) |
|---|---|
| 6 | 1,9 |
| 7 | 1,7 |

## Revendications

1. Composition à base d'oxyde de zirconium et d'au moins un oxyde d'une terre rare autre que le cérium, choisie dans le groupe constitué par l'yttrium, le lanthane, le néodyme, le praséodyme et le gadolinium, dans une proportion en masse en oxyde de zirconium d'au moins 70%, la proportion en oxyde de la terre rare autre que le cérium étant comprise entre 10 et 30% et la composition ne contenant pas d'oxyde de cérium, **caractérisée en ce qu'**elle présente après calcination à une température de 900°C pendant 4 heures, deux populations de pores dont les diamètres respectifs sont centrés, pour la première, autour d'une valeur comprise entre 20 et 40 nm et, pour la seconde, autour d'une valeur comprise entre 80 nm et 200 nm et **en ce qu'**après calcination à 1100°C pendant 4 heures, elle présente une surface spécifique d'au moins 25 m²/g.

2. Composition selon la revendication 1, **caractérisée en ce que** le diamètre de la première population de pores est centré autour d'une valeur comprise entre 20 nm et 35 nm et plus particulièrement entre 20 nm et 30 nm et le diamètre de la seconde population de pores est centré autour d'une valeur comprise entre 80 nm et 150 nm et plus particulièrement entre 90 nm et 110 nm.

3. Composition selon la revendication 1 ou 2, **caractérisée en ce qu'**après calcination à une température de 900°C pendant 4 heures, elle présente un volume poreux total d'au moins 1,3 mlHg/g, plus particulièrement d'au moins 1,5 ml Hg/g.

4. Composition selon l'une des revendications précédentes, **caractérisée en ce qu'**après calcination à 1100°C pendant 4 heures, elle présente une population de pores dont le diamètre est centré autour d'une valeur comprise entre 30 nm et 70 nm.

5. Composition selon l'une des revendications précédentes, **caractérisée en ce qu'**après calcination à 1100°C pendant 4 heures, elle présente un volume poreux total d'au moins 0,9 mlHg/g.

6. Composition selon l'une des revendications précédentes, **caractérisée en ce qu'**elle est à base des oxydes d'au moins deux terres rares autres que le cérium.

7. Composition selon l'une des revendications précédentes, **caractérisée en ce qu'**elle comprend de l'oxyde de lanthane et **en ce qu'**après calcination à 1000°C pendant 4 heures elle se présente sous forme de deux phases cristallographiques de nature cubique.

8. Composition selon l'une des revendications précédentes, **caractérisée en ce qu'**après calcination à 1150°C pendant 4 heures, elle présente une surface spécifique d'au moins 7 m²/g, plus particulièrement d'au moins 10 m²/g.

9. Procédé de préparation d'une composition selon l'une des revendications 1 à 8, **caractérisé en ce qu'**il comprend les étapes suivantes :
- (a1) on forme un mélange en phase liquide comprenant soit un composé du zirconium uniquement soit ce composé avec un ou des composés des terres rares autres que le cérium dans une quantité de ce ou ces derniers composés qui est inférieure à la quantité nécessaire pour obtenir la composition recherchée,
- (b1) on met en présence, sous agitation, ledit mélange avec un composé basique;
- (c1) on met en présence, sous agitation, le milieu obtenu à l'étape précédente avec soit les composés des terres rares autres que le cérium si ces composés n'étaient pas présents à l'étape (a1) soit la quantité restante nécessaire desdits composés, l'énergie d'agitation utilisée lors de l'étape (c1) étant inférieure à celle utilisée lors de l'étape (b1), ce par quoi on obtient un précipité;
- (d1) on chauffe en milieu aqueux ledit précipité;
- (e1) on ajoute au précipité obtenu à l'étape précédente un additif choisi parmi les tensioactifs anioniques, les tensioactifs non ioniques, les polyéthylène-glycols, les acides carboxyliques et leurs sels et les tensioactifs du type éthoxylats d'alcools gras carboxyméthylés;
- (f1) on calcine le précipité ainsi obtenu.

10. Procédé selon la revendication 9, **caractérisé en ce qu'**on utilise comme composés des éléments zirconium et terres rares un sel de ces éléments choisi parmi les nitrates, les sulfates, les acétates, les chlorures, ou encore, le composé de zirconium pouvant être sous forme d'une combinaison de ces sels.

11. Procédé selon la revendication 9 ou 10, **caractérisé en ce qu'**on ajuste la force ionique du mélange en phase liquide précité de l'étape (a1) avant sa mise en présence avec le composé basique et **en ce qu'**on ajuste la force ionique de cette solution avant de la mettre en présence du composé basique, cette ajustement de la force ionique étant réalisé par addition audit mélange ou à ladite solution d'ions supplémentaires choisis parmi les ions sulfates, chlorures et nitrates.

12. Procédé selon l'une des revendications 9 à 11, **caractérisé en ce qu'**on utilise le composé basique de l'étape (b1), sous forme d'une solution dont on ajuste la force ionique avant la précipitation par addition à ladite solution d'un sel choisi parmi le nitrate d'ammonium, le sulfate d'ammonium ou le chlorure d'ammonium.

13. Système catalytique, **caractérisé en ce qu'**il comprend une composition selon l'une des revendications 1 à 8.

14. Procédé de traitement des gaz d'échappement des moteurs à combustion interne, **caractérisé en ce qu'**on utilise à titre de catalyseur un système catalytique selon la revendication 13 ou une composition selon l'une des revendications 1 à 8.

## Patentansprüche

1. Zusammensetzung auf der Basis von Zirkoniumoxid und mindestens einem Seltenerdoxid außer Cer, ausgewählt aus der Gruppe bestehend aus Yttrium, Lanthan, Neodym, Praseodym und Gadolinium, mit einem Gewichtsanteil von Zirkoniumoxid von mindestens 70 %, wobei der Anteil an Seltenerdoxid außer Cer im Bereich zwischen 10 und 30 % liegt und die Zusammensetzung kein Ceroxid enthält, **dadurch gekennzeichnet, dass** sie nach dem Kalzinieren bei einer Temperatur von 900 °C für 4 Stunden zwei Porenpopulationen aufweist, deren jeweilige Durchmesser zum einen um einen Wert zwischen 20 und 40 nm und zum anderen um einen Wert zwischen 80 nm und 200 nm zentriert sind, und dadurch, dass sie nach dem Kalzinieren bei 1.100 °C für 4 Stunden eine spezifische Oberfläche von mindestens 25 m²/g aufweist.

2. Zusammensetzung nach Anspruch 1, **dadurch gekennzeichnet, dass** der Durchmesser der ersten Porenpopulation um einen Wert zwischen 20 nm und 35 nm und insbesondere zwischen 20 nm und 30 nm zentriert ist und der Durchmesser der zweiten Porenpopulation um einen Wert zwischen 80 nm und 150 nm und insbesondere zwischen 90 nm und 110 nm zentriert ist.

3. Zusammensetzung nach Anspruch 1 oder 2, **dadurch gekennzeichnet, dass** sie nach dem Kalzinieren bei einer Temperatur von 900 °C für 4 Stunden ein Gesamtporenvolumen von mindestens 1,3 ml Hg/g, insbesondere mindestens 1,5 ml Hg/g, aufweist.

4. Zusammensetzung nach einem der vorhergehenden Ansprüche, **dadurch gekennzeichnet, dass** sie nach dem Kalzinieren bei 1.100 °C für 4 Stunden eine Porenpopulation aufweist, deren Durchmesser um einen Wert zwischen 30 nm und 70 nm zentriert ist.

5. Zusammensetzung nach einem der vorhergehenden Ansprüche, **dadurch gekennzeichnet, dass** sie nach dem Kalzinieren bei 1.100 °C für 4 Stunden ein Gesamtporenvolumen von mindestens 0,9 ml Hg/g aufweist.

6. Zusammensetzung nach einem der vorhergehenden Ansprüche, **dadurch gekennzeichnet, dass** sie auf den Oxiden von mindestens zwei Seltenerden außer Cer basiert.

7. Zusammensetzung nach einem der vorhergehenden Ansprüche, **dadurch gekennzeichnet, dass** sie Lanthanoxid umfasst und dadurch, dass sie nach dem Kalzinieren bei 1.000 °C für 4 Stunden in Form von zwei kristallographischen Phasen kubischer Natur vorliegt.

8. Zusammensetzung nach einem der vorhergehenden Ansprüche, **dadurch gekennzeichnet, dass** sie nach dem Kalzinieren bei 1.150 °C für 4 Stunden eine spezifische Oberfläche von mindestens 7 m²/g, insbesondere mindestens 10 m²/g, aufweist.

9. Verfahren zur Herstellung einer Zusammensetzung nach einem der Ansprüche 1 bis 8, **dadurch gekennzeichnet, dass** es die folgenden Schritte umfasst:
- (a1) Bilden einer Flüssigphasenmischung, umfassend entweder nur eine Zirkoniumverbindung oder diese Verbindung mit einer oder mehreren Seltenerdverbindungen außer Cer in einer Menge dieser einen oder mehreren letztgenannten Verbindungen, die kleiner ist als die Menge, die erforderlich ist, um die gewünschte Zusammensetzung zu erhalten,
- (b1) Inkontaktbringen, unter Rühren, der Mischung mit einer basischen Verbindung;
- (c1) Inkontaktbringen, unter Rühren, des im vorhergehenden Schritt erhaltenen Mediums entweder mit den Seltenerdverbindungen außer Cer, falls diese Verbindungen in Schritt (a1) nicht vorhanden waren, oder der erforderlichen restlichen Menge der Verbindungen, wobei die in Schritt (c1) verwendete Rührenergie kleiner ist als die in Schritt (b1) verwendete, wodurch ein Niederschlag erhalten wird;
- (d1) Erhitzen des Niederschlags in wässrigem Medium;
- (e1) Zugeben, zu dem im vorhergehenden Schritt erhaltenen Niederschlag, eines Additivs, ausgewählt aus anionischen Tensiden, nichtionischen Tensiden, Polyethylenglykolen, Carbonsäuren und Salzen davon und Tensiden vom Typ carboxymethylierter Fettalkoholethoxy late;
- (f1) Kalzinieren des auf diese Weise erhaltenen Niederschlags.

10. Verfahren nach Anspruch 9, **dadurch gekennzeichnet, dass** als Zirkonium- und Seltenerdelementverbindungen ein Salz dieser Elemente verwendet wird, ausgewählt aus Nitraten, Sulfaten, Acetaten, Chloriden, oder die Zirkoniumverbindung auch in Form einer Kombination dieser Salze vorliegen kann.

11. Verfahren nach Anspruch 9 oder 10, **dadurch gekennzeichnet, dass** die Ionenstärke der oben genannten Flüssigphasenmischung von Schritt (a1) eingestellt wird, bevor sie mit der basischen Verbindung in Kontakt gebracht wird, und dadurch, dass die Ionenstärke dieser Lösung eingestellt wird, bevor sie mit der basischen Verbindung in Kontakt gebracht wird, wobei diese Einstellung der Ionenstärke durch Zugabe von zusätzlichen Ionen, ausgewählt aus Sulfat-, Chlorid- und Nitrationen, zu der Mischung oder der Lösung erfolgt.

12. Verfahren nach einem der Ansprüche 9 bis 11, **dadurch gekennzeichnet, dass** die basische Verbindung von Schritt (b1) in Form einer Lösung verwendet wird, deren Ionenstärke vor der Ausfällung durch Zugabe, zu der Lösung, eines Salzes, ausgewählt aus Ammoniumnitrat, Ammoniumsulfat oder Ammoniumchlorid, eingestellt wird.

13. Katalytisches System, **dadurch gekennzeichnet, dass** es eine Verbindung nach einem der Ansprüche 1 bis 8 umfasst.

14. Verfahren zum Behandeln von Abgasen von Verbrennungsmotoren, **dadurch gekennzeichnet, dass** als Katalysator ein katalytisches System nach Anspruch 13 oder eine Zusammensetzung nach einem der Ansprüche 1 bis 8 verwendet wird.

## Claims

1. Composition based on zirconium oxide and on at least one oxide of a rare earth other than cerium, rare earth which is selected from the group consisting of yttrium, lanthanum, neodymium, praseodymium and gadolinium, in a weight proportion of zirconium oxide of at least 70%, the proportion of oxide of rare earth other than cerium being between 10% and 30% and the composition not containing cerium oxide, **characterized in that** it exhibits, after calcination at a temperature of 900°C for 4 hours, two populations of pores of which the respective diameters are centred, for the first population, about a value of between 20 and 40 nm and, for the second population, about a value of between 80 nm and 200 nm and **in that**, after calcination at 1100°C for 4 hours, it has a specific surface area of at least 25 m²/g.

2. Composition according to Claim 1, **characterized in that** the diameter of the first population of pores is centred about a value of between 20 nm and 35 nm and more particularly between 20 nm and 30 nm and the diameter of the second population of pores is centred about a value of between 80 nm and 150 nm and more particularly between 90 nm and 110 nm.

3. Composition according to Claim 1 or 2, **characterized in that**, after calcination at a temperature of 900°C for 4 hours, it has a total pore volume of at least 1.3 ml Hg/g, more particularly of at least 1.5 ml Hg/g.

4. Composition according to one of the preceding claims, **characterized in that**, after calcination at 1100°C for 4 hours, it exhibits a population of pores of which the diameter is centred about a value of between 30 nm and 70 nm.

5. Composition according to one of the preceding claims, **characterized in that**, after calcination at 1100°C for 4 hours, it has a total pore volume of at least 0.9 ml Hg/g.

6. Composition according to one of the preceding claims, **characterized in that** it is based on oxides of at least two rare earths other than cerium.

7. Composition according to one of the preceding claims, **characterized in that** it comprises lanthanum oxide and **in that**, after calcination at 1000°C for 4 hours, it is in the form of two crystallographic phases of cubic nature.

8. Composition according to one of the preceding claims, **characterized in that**, after calcination at 1150°C for 4 hours, it has a specific surface area of at least 7 m²/g, more particularly of at least 10 m²/g.

9. Process for preparing a composition according to one of Claims 1 to 8, **characterized in that** it comprises the following steps:
- (a1) a mixture is formed in the liquid phase comprising either a zirconium compound only or this compound with one or more compounds of rare earths other than cerium, in an amount of the latter compound(s) which is less than the amount required to obtain the desired composition;
- (b1) said mixture is brought together with a basic compound, with stirring;
- (c1) the medium obtained in the preceding step is brought together, with stirring, with either the compounds of rare earths other than cerium if these compounds were not present in step (a1), or the required remaining amount of said compounds, the stirring energy used during step (c1) being less than that used during step (b1), as a result of which a precipitate is obtained;
- (d1) said precipitate is heated in an aqueous medium;
- (e1) an additive selected from anionic surfactants, nonionic surfactants, polyethylene glycols, carboxylic acids and their salts and surfactants of the carboxymethylated fatty alcohol ethoxylate type is added to the precipitate obtained in the preceding step;
- (f1) the resulting precipitate is calcined.

10. Process according to Claim 9, **characterized in that** use is made, as compounds of the zirconium and rare earth elements, of a salt of these elements selected from nitrates, sulfates, acetates and chlorides, or else the zirconium compound may be in the form of a combination of these salts.

11. Process according to Claim 9 or 10, **characterized in that** the ionic strength of the abovementioned liquid-phase mixture of step (a1) is adjusted before it is brought together with the basic compound and **in that** the ionic strength of this solution is adjusted before bringing it together with the basic compound, this adjustment of the ionic strength being carried out by adding to said mixture or to said solution additional ions selected from sulfate, chloride and nitrate ions.

12. Process according to one of Claims 9 to 11, **characterized in that** the basic compound of step (b1) is used in the form of a solution, the ionic strength of which is adjusted before the precipitation by addition to said solution of a salt selected from ammonium nitrate, ammonium sulfate or ammonium chloride.

13. Catalytic system, **characterized in that** it comprises a composition according to one of Claims 1 to 8.

14. Process for treating the exhaust gases from internal combustion engines, **characterized in that** use is made, as catalyst, of a catalytic system according to Claim 13 or of a composition according to one of Claims 1 to 8.
